# EUROPÄISCHE PATENTSCHRIFT

(11) **EP 3 242 628 B1**
(45) Veröffentlichungstag und Bekanntmachung des Hinweises auf die Patenterteilung: **24.01.2024**
(21) Anmeldenummer: 15816146.3
(22) Anmeldetag: 17.12.2015
(51) Int. Cl.: A61C 13/10, A61C 13/01

(54) **VERFAHREN ZUR HERSTELLUNG EINER DENTALPROTHESE**
PROCESS FOR THE MANUFACTURE OF A DENTAL PROSTHESIS
PROCÉDÉ POUR LA FABRICATION D'UNE PROTHÈSE DENTAIRE

(30) Priorität: 07.01.2015 DE 102015100080
(43) Veröffentlichungstag der Anmeldung: 15.11.2017
(73) Patentinhaber: Kulzer GmbH, 63450 Hanau (DE)
(72) Erfinder: SAGOLLA, Jochen, 60431 Frankfurt (DE); REDEMANN, Helmut, 60325 Frankfurt (DE); FUNK, Matthias, 63456 Hanau (DE)
(74) Vertreter: Schultheiss & Sterzel Patentanwälte PartG mbB
(86) Internationale Anmeldenummer: PCT/EP2015/080305
(87) Internationale Veröffentlichungsnummer: WO 2016/110392

(56) Entgegenhaltungen:
- JP-A- 2003 126 120
- US-A- 2 641 802
- US-A- 4 681 543
- US-A- 4 906 186
- US-A1- 2010 086 899

## Beschreibung

Die Erfindung betrifft ein Verfahren zur Herstellung einer Dentalprothese aus einer Prothesenbasis und mehreren Prothesenzähnen. Die Erfindung betrifft auch eine Dentalprothese hergestellt mit einem solchen Verfahren und ein Set zum Durchführen eines solchen Verfahrens.

Der gängige Weg ist die analoge Erstellung von Dentalprothesen. Zur Herstellung der Prothesenbasis wird derzeit also meist ein analoges Verfahren verwendet, bei dem zunächst ein Abdruck des zahnlosen Kiefers des Patienten genommen wird. Aus diesem Abdruck wird ein Gipsmodell der Patientensituation gefertigt. Anschließend wird ein Funktionsmodell der Prothese aus Wachs auf dem Gipsmodell aufgebaut und mit Prothesenzähnen bestückt. Diese Wachsprothese geht zum Zahnarzt, um eine Anprobe am Patienten durchzuführen, bei der die Stellungen der künstlichen Prothesenzähne korrigiert werden können. Diese korrigierte Aufstellung geht dann zurück an das Labor, dass dann die Wachsbasis entfernt und die Aufstellung der künstlichen Zähne in eine finale Basis aus Kunststoff überführt. Dazu wird eine Hohlform oder Gießform aus diesen beiden Teilen aufgebaut, in der die Prothesenzähne bereits integriert sind. Dadurch sind die Prothesenzähne bereits in die Hohlform eingesetzt. Die Form wird mit einem zahnfleischfarbenen Kunststoff ausgegossen und während des Gießprozesses werden die Prothesenzähne mit der Prothesenbasis verbunden. Nach Aushärtung des Kunststoffs wird dieser nachbearbeitet, um die gewünschte Form zu erhalten.

Fertige Prothesenbasen können auch aus einem härtenden Kunststoff mit einer Zwischenbasis aus Wachs hergestellt werden. Dabei wird nach der Anprobe und einer eventuellen Umstellung der künstlichen Prothesenzähne ein Vorwall aus Silikon oder Gips erstellt, um die Position und Ausrichtung der künstlichen Zähne zu sichern. Danach entfernt man die Wachsbasis, der entstehende Hohlraum wird in der Regel mit Autopolymerisat aufgefüllt und die künstlichen Prothesenzähne damit auf der festen Prothesenbasis fixiert beziehungsweise einpolymerisiert.

Zur Herstellung der Dentalprothese werden Prothesenzähne also manuell und einzeln auf einer Wachsbasis auf einem Gipsmodell des unbezahnten Kiefers aufgestellt. Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis aus der Form heraus zu lösen, um einen Hohlraum für den Prothesenkunststoff zu schaffen. Die Prothesenzähne verbleiben dabei im Einbettmaterial. Ein entsprechender Kunststoff wird in den Hohlraum injiziert oder gegossen, dadurch erhält man nach Aushärtung des Kunststoffs die Dentalprothese. Bei der Aufstellung der Prothesenzähne werden diese der jeweiligen Mundsituation des Patienten vom Zahntechniker und gegebenenfalls auch vom Zahnarzt angepasst und beschliffen.

Das gesamte derartige Verfahren ist sehr Zeit- und damit Kostenintensiv und basiert auf einer großen Zahl handwerklicher Schritte. Aus der US 2 641 802 ist ein Verfahren zur Herstellung einer Dentalprothese bei dem die Prothesenzähne zunächst mit einer basal aufgesteckten Kappe in das Material für die Prothesenbasis positioniert werden, um die Prothesenbasis zu erzeugen. Anschließend wird in die Zwischenräume ein schnellhärtender Zement eingefüllt und die Positionen der Prothesenzähne werden durch einen Biss des Patienten angepasst. Das in US 2 641 802 beschriebene Verfahren umfasst keine Verfahrensschritte, die mittels Computer Aided Manufacturing oder Rapid Prototyping durchgeführt werden.

Im Zuge der Digitalisierung verlagert sich der Aufwand zur Herstellung, Aufstellung und Konstruktion der Prothesenbasen und der Prothesenzähne in das CAD-Modell und die eigentliche Herstellung wird von Maschinen (CAM-Maschinen) übernommen.

Digitale Fertigungsmethoden gewinnen im Dentalbereich immer mehr an Bedeutung. Zahnersatz, wie zum Beispiel Kronen und Brücken, wird seit einigen Jahren mittels CAD/CAM-Technologien subtraktiv in Fräsverfahren hergestellt (CAM - Computer-Aided Manufacturing, Deutsch: rechner-unterstützte Fertigung, CAD - Computer-Aided Design, Deutsch: rechnerunterstützte Konstruktion). Die Problematik der Verbindung inklusive der Korrekturmöglichkeit besteht jedoch in der herkömmlichen wie auch in der digitalen Vorgehensweise.

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Ferner gewinnen generative CAM-Verfahren wie SLM (Selective Laser Melting) zur Herstellung von Kronen, Brücken und Modellen sowie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbissschienen, Bohrschablonen oder Dentalmodellen immer mehr an Bedeutung.

Dabei ist die Herstellung von Zahnersatz auf Acrylatbasis mittels RP-Verfahren (Rapid-Prototyping-Verfahren) bisher immer noch starken Einschränkungen unterworfen. Mehrfarbiger Zahnersatz oder Zahnersatz aus verschiedenen Polymer-Materialien (zum Beispiel für Schmelz- und Dentinmassen) zur Herstellung von hochwertigem und ästhetischem Zahnersatz ist bisher nur mittels aufwendiger RP-Maschinen mit mehreren Materialkammern oder mittels Klebe- und Fügetechniken herstellbar.

Ebenso ist die Herstellung von Materialkombinationen (zum Beispiel CoCr und Polymer) mittels RP-Verfahren bisher sehr aufwendig und nicht in Serienreife umgesetzt. Die generative Herstellung von ästhetisch anspruchsvollen Konfektionszähnen für Teil- oder Totalprothesen ist derzeit nicht möglich, da mittels Stereolithographie nur ein Material beziehungsweise eine Farbe gedruckt werden kann. Das Drucken von mehrfarbigen Konfektionszähnen ist derzeit nicht möglich. Aus diesem Grund wird die Prothesenbasis mittels CAM-Verfahren (beispielsweise Fräsen oder Drucken) hergestellt und vorkonfektionierte Prothesenzähne werden mit der Prothesenbasis verklebt.

Die US 2010/086899 A1 offenbart ein Verfahren bei dem die basalen Seiten von Prothesenzähnen mit einem RP-Verfahren bearbeitet werden. Mit der US 4 681 543 wird eine Schablone zum Übertragen der Prothesenzähne von einem Modell zu einer Dentalprothese vorgeschlagen. Eine ähnliche Schablone wird mit der US 4 906 186 offenbart.

Aus der EP 2 571 451 B1 und der EP 2 666 438 A2 sind Verfahren bekannt, bei denen Prothesenzähne in einer Halterung in Wachs eingebettet werden und anschließend basal abgefräst werden. Die abgefrästen Prothesenzähne werden von dem Wachs befreit und anschließend in eine Prothesenbasis eingesetzt und dort eingeklebt, um eine Dentalprothese herzustellen.

Die US 4 175 322 A1 und die US 4 184 253 A1 offenbaren Verfahren, bei denen zwei oder drei Teile eine Vollprothese in einer Wachsbasis relativ zueinander beweglich sind, um die Vollprothese an die Form des Mundraums des Patienten anpassen zu können.

Insbesondere bei derartigen neuen Fertigungsverfahren für Prothesenbasen aus Kunststoff, die durch Fräsen oder durch additive Verfahren gefertigt wurden, lässt sich eine Korrektur der Zahnaufstellung nicht ohne weiteres verwirklichen, wie dies mit den herkömmlichen analogen Verfahren der Fall ist. Diese Korrekturmöglichkeit direkt am Patienten ist aber sinnvoll, da die Übertragung der Bisslage und die Aufstellung der Prothesenzähne aus dem zahnlosen Kiefer des Patienten in ein analoges oder auch digitales Modell fehlerbehaftet sind. Die Prothesenbasis ist bei diesen Fertigungsverfahren fertig gestellt und irreversibel. Der Kieferkamm der Prothesenbasis ist bereits mit Zahnfächern in Form von passgenauen Vertiefungen zur Aufnahme der künstlichen Prothesenzähne versehen. Diese Prothesenzähne können bereits passgenau in die Prothesenbasis eingesetzt werden. Eine Befestigung erfolgt mit einem Kleber oder einem Polymer. Hierdurch verliert man jedoch eine Korrekturmöglichkeit.

Solche Verfahren haben also den Nachteil, dass geringe Korrekturen der Position und der Ausrichtung der einzelnen Prothesenzähne in der Prothesenbasis durch den anwendenden Zahnarzt oder Zahntechniker nur mit größerem Aufwand durchgeführt werden können. Die Prothesenzähne müssen okklusal bearbeitet oder entnommen werden, wobei anschließend die Prothesenbasis beschliffen wird, oder die Prothesenzähne basal beschliffen werden, um deren Position und Lage anzupassen. Die Aufgabe der Erfindung besteht also darin, die Nachteile des Stands der Technik zu überwinden. Insbesondere sollen ein Verfahren bereitgestellt werden, mit dem eine einfache Korrektur der Position und/oder der Ausrichtung der Prothesenzähne in der Prothesenbasis durch den Zahnarzt beziehungsweise den Anwender möglich ist, um die Dentalprothese auf einfache Weise an die Bedürfnisse und die Mundraumsituation des Patienten anpassen zu können. Zudem soll eine möglichst einfache, vollständige und kostengünstige Herstellung der Prothesenbasis und der Dentalprothese möglich sein. Ferner ist es Aufgabe der Erfindung, einen Weg aufzuzeigen, wie die künstlichen Prothesenzähne in der Prothesenbasis irreversibel in der gewünschten Position und/oder Ausrichtung mit der Prothesenbasis verbunden werden können. Mit der Erfindung soll auch eine fertige Dentalprothese und ein Set zur Umsetzung eines erfindungsgemäßen Verfahrens bereitgestellt werden.

Die Aufgaben der Erfindung werden gelöst durch ein Verfahren zur Herstellung einer Dentalprothese aus einer Prothesenbasis und mehreren Prothesenzähnen aufweisend die folgenden chronologischen Schritte:
A) Bereitstellen der Prothesenzähne und der Prothesenbasis, wobei die Prothesenbasis mit einem CAM-Verfahren oder einem Rapid-Prototyping-Verfahren hergestellt und/oder bearbeitet wird, so dass die Prothesenbasis mehrere Zahnfächer zum Anlegen von basalen Flächen der Prothesenzähne aufweist;
B) ein plastisch verformbares Verbindungsmittel wird auf die Zahnfächer aufgebracht und/oder basal auf die Prothesenzähne aufgebracht;
C) die Prothesenzähne werden an die Zahnfächer der Prothesenbasis angelegt und dabei mit Hilfe des Verbindungsmittels mit der Prothesenbasis derart verbunden, dass die Prothesenzähne nach dem Anlegen an die Zahnfächer beweglich gegenüber der Prothesenbasis sind, wobei die Position und die Ausrichtung der Prothesenzähne zur Prothesenbasis (aufgrund des Verbindungsmittels) erhalten bleibt, wenn keine externe Krafteinwirkung auf die Prothesenzähne ausgeübt wird;
D) die Position und/oder die Ausrichtung wenigstens eines Prothesenzahns in der Prothesenbasis wird verändert; und
E) das plastisch verformbare Verbindungsmittel wird ausgehärtet und die Prothesenzähne werden dabei fest mit der Prothesenbasis verbunden, wobei die Position und die Ausrichtung der Prothesenzähne zur Prothesenbasis erhalten bleiben.

Die Bezeichnung "koronal" (lat. corona 'Krone') bedeutet an der Zahnkrone und zur Zahnkrone hin als Lage- und Richtungsbezeichnung an den Zähnen, umfassend die okklusale Oberfläche und die die okklusale Oberfläche umgebenden Umfangsbereiche der Zahnprothese. Die Bezeichnung "okklusal" bedeutet an der Okklusionsfläche beziehungsweise Kaufläche und zur Okklusionsfläche hin als Lage- und Richtungsbezeichnung an den Zähnen. Die Bezeichnung "basal" bezeichnet die der okklusalen Fläche gegenüberliegende Seite, wobei bei der Bezeichnung "basal" auch noch angrenzende Bereiche des Zahnhalses beziehungsweise der angrenzenden umlaufende Fläche der Prothesenzähne umfasst sein können. Diese Begriffe werden auch für Prothesenzähne angewendet.

Die Konsistenz des Verbindungsmittels ist bevorzugt fest und wachsartig und soll dennoch so flexibel sein, dass ein manuelles Umstellen und eine manuelle Korrektur der Position und/oder der Ausrichtung der Prothesenzähne möglich sind. Das Verbindungsmittel ist bevorzugt wachsartig. Als Verbindungsmittel wird bevorzugt eine weitgehend homogene oder vollständig homogene Paste oder Knete oder ein weitgehend homogenes oder vollständig homogenes wachsartiges Material verwendet.

Als Zahnfächer werden erfindungsgemäß jegliche Strukturen in der Prothesenbasis bezeichnet, die zum Verbinden mit den Prothesenzähnen vorgesehen sind. Grundsätzlich können die Prothesenzähne einfach auf dem äußerlich glatten und ebenmäßigen Kieferbogen der Prothesenbasis befestigt werden. Dadurch, dass der Kieferbogen der Prothesenbasis nicht überall gleich ausgeformt ist (beispielsweise durch die Krümmung der Oberflächen, Verbreiterung des Kiefersattels im Backenzahnbereich aus anatomischen Gründen, etc.), können die Zahnfächer also im Extremfall bereits durch die Individualität der Oberfläche der Prothesenbasis über die Länge des Kieferbogens realisiert werden. Bei angepasster basaler Oberfläche der Prothesenzähne können die Prothesenzähne dann nämlich auch nur auf den passenden Teilbereichen der Prothesenbasis aufgesetzt werden.

Bevorzugt aber sollte die Prothesenbasis im Bereich der Zahnfächer soweit vorgeformt sein, dass eine Anordnung und ungefähre Position und ungefähre Ausrichtung der Prothesenzähne vorgegeben ist. Dabei können komplette Zahnfächer als Vertiefungen in der Prothesenbasis vorgesehen sein, die noch genügend Platz für die Aufnahme des Verbindungsmittels vorsehen und die einen großen Teil des Zahnhalses umschließen. Aber auch niedrige Kavitäten, die nur den basalen Bereich des Zahnhalses umschließen und somit nur die Anordnung und die ungefähren Positionen der Prothesenzähne vorgeben, wären als Zahnfächer denkbar und möglich. Der Zahnhalsbereich und die Zahnfächer werden in diesem Fall bevorzugt vollständig mit dem Verbindungsmittel ausgeformt. Ebenso ist es möglich, die Zahnfächer alternativ zur Vertiefung oder zusammen mit einer Vertiefung durch oder mit Erhebungen auf dem Kieferbogen der Prothesenbasis auszuformen, die mit Vertiefungen an der basalen Oberfläche der Prothesenzähne korrespondieren.

Bei den erfindungsgemäß bevorzugten, als Vertiefungen ausgeführten Zahnfächern kann auch davon gesprochen werden, dass die Prothesenzähne in die Zahnfächer eingesetzt werden und in den Zahnfächern beweglich sind, anstelle von einem Anlegen der Prothesenzähne an die Zahnfächer zu sprechen. Die Zahnfächer sind dann zur Aufnahme der Prothesenzähne geeignet.

Es versteht sich von selbst, dass sich die plastische Verformbarkeit des Verbindungsmittels durch die Aushärtung verändert, beziehungsweise das Verbindungsmittel nach dem Aushärten nicht mehr plastisch verformbar ist.

Unter der Position der Prothesenzähne relativ zu der Prothesenbasis wird die relative Anordnung der Prothesenzähne zu der Prothesenbasis im Raum verstanden. Unter der Ausrichtung der Prothesenzähne relativ zu der Prothesenbasis wird die Neigung einer festen Achse der Prothesenzähne zur Prothesenbasis verstanden.

Beweglich bedeutet im vorliegenden Zusammenhang, dass die Prothesenzähne in der Prothesenbasis beweglich aber nicht völlig frei beweglich sind. Die eingesetzten Prothesenzähne können dann in oder an den für die Fixierung der Prothesenzähne vorgesehenen Zahnfächern der Prothesenbasis gegen die Prothesenbasis um einige Grad gedreht oder gekippt beziehungsweise um einige zehntel Millimeter verschoben werden.

Mit der Erfindung wird auch vorgeschlagen, dass bei einer Bewegung der Prothesenzähne relativ zu der Prothesenbasis oder bei einer Veränderung der Position und/oder der Ausrichtung des wenigstens einen Prothesenzahns relativ zu der Prothesenbasis sich das Verbindungsmittel plastisch verformt.

Hierdurch wird sichergestellt, dass sich die Prothesenzähne aufgrund elastischer Kräfte des Verbindungsmittels nicht wieder in die oder in Richtung der vorherigen Position und/oder Ausrichtung zurückbewegen. Dabei soll sich das Verbindungsmittel möglichst nicht von den Prothesenzähnen lösen.

Es kann auch vorgesehen sein, dass zur Veränderung der Position und/oder der Ausrichtung des wenigstens einen Prothesenzahns relativ zu der Prothesenbasis eine Kraft auf den wenigstens einen Prothesenzahn ausgeübt wird, wobei bevorzugt die Prothesenbasis zuvor fixiert wird und zumindest während der Einwirkung der Kraft auf den wenigstens einen Prothesenzahn fixiert bleibt.

Durch die gezielte Krafteinwirkung kann erreicht werden, dass es nur gezielt und gewollt zu einer Veränderung der Position und/oder der Ausrichtung des wenigstens einen Prothesenzahns relativ zu der Prothesenbasis kommt.

Besonders bevorzugte Ausführungsformen des erfindungsgemäßen Verfahrens können auch vorsehen, dass das Verbindungsmittel eine Fließgrenze aufweist, unterhalb derer das Verbindungsmittel elastisch ist und oberhalb derer das Verbindungsmittel plastisch verformbar ist.

Die Fließgrenze ist eine mechanische Grenzspannung (Definiert durch das Verhältnis einer Kraft zu einer Fläche, auf die die Kraft einwirkt) die erreicht werden muss, um eine plastische Deformation eines Materials (hier des Verbindungsmittels) zu bewirken. Durch diese Materialeigenschaft des Verbindungsmittels kann sichergestellt werden, dass nur eine gezielte Beaufschlagung mit einer Kraft, die zu einer Spannung oberhalb der Fließgrenze führt, eine plastische Verformung des Verbindungsmittels bewirkt und nicht bereits die Gewichtskraft der Prothesenzähne oder Beschleunigungskräfte, die beim Bewegen der über das Verbindungsmittel mit der Prothesenbasis verbundenen Prothesenzähne auf das Verbindungsmittel aufgrund der Trägheit der Prothesenzähne wirken.

Dabei kann vorgesehen sein, dass das Verbindungsmittel eine Fließgrenze zwischen 10⁴ N/m² und 10⁷ N/m² aufweist, bevorzugt eine Fließgrenze zwischen 10⁴ N/m² und 10⁶ N/m² aufweist, besonders bevorzugt eine Fließgrenze zwischen 10⁴ N/m² und 10⁵ N/m² aufweist.

Die Fließgrenze hat die Dimension einer Spannung und ist bestimmt durch das Verhältnis des Betrags einer Kraft zu der Fläche, auf die diese Kraft wirkt. Zur Festlegung der unteren Fließgrenze wurde angenommen, dass ein Prothesenzahn 1 Gramm wiegt, eine Auflagefläche von 10 mm² bis 100 mm² hat und sich das Verbindungsmittel bei Einwirkung der Erdbeschleunigung 10 m/s² auf den Zahn nicht plastisch verformen sollte. Für die ganz besonders bevorzugte obere Fließgrenze wurde angenommen, dass sich das Verbindungsmittel bei einer Einwirkung einer Kraft von 1 N auf den Prothesenzahn plastisch verformt, das heißt, dass zumindest ab einer Gewichtskraft von 100 g auf den Prothesenzahn eine plastische Verformung des Verbindungsmittels erfolgt. 10⁷ N/m² entsprechen der Einwirkung einer Kraft von 100 kg auf den Prothesenzahn als Obergrenze für den Beginn der plastischen Verformung des Verbindungsmittels.

Bevorzugt hat das Verbindungsmittel eine Konsistenz wie Knete oder Wachs.

Verbindungsmittel mit den genannten Fließgrenzen stellen aufgrund der bereits genannten physikalischen Eigenschaften besonders bevorzugte Materialien dar, mit denen sich das erfindungsgemäße Verfahren besonders einfach und für Fehler unanfällig durchführen lässt.

Mit einer Weiterbildung des erfindungsgemäßen Verfahrens wird auch vorgeschlagen, dass die an die Zahnfächer der Prothesenbasis angelegten Prothesenzähne auf der koronalen Seite in einem Schlüssel fixiert werden, wobei dadurch die Lage und die Position der Prothesenzähne zueinander in der veränderten (beziehungsweise gewünschten) Position und/oder Ausrichtung gesichert wird.

Als Schlüssel wird in der vorliegenden Erfindung ein Material oder eine Vorrichtung verstanden, mit dem die Prothesenzähne ortsfest und orientierungsfest relativ zueinander befestigt werden, ohne dass sich deren Position oder Ausrichtung zueinander nach der Befestigung an dem Schlüssel noch ändert. Bevorzugt kann eine Silikonmasse als Schlüssel verwendet werden.

Mit Hilfe des Schlüssels kann eine eindeutige relative Fixierung der Prothesenzähne zueinander sichergestellt werden. Bevorzugt wird der Schlüssel mit Hilfe eines CAD/CAM-Verfahrens basierend auf einem vorhandenen CAD-Modell der Dentalprothese hergestellt. Zur erfindungsgemäßen Anwendung und Herstellung des Schlüssels sei auf die nicht vorveröffentlichte DE 10 2014 109 563 verwiesen, deren diesbezügliche Inhalte und Merkmale durch Bezugnahme in den vorliegenden Text aufgenommen werden.

Es ist vorgesehen, dass die Prothesenbasis und/oder die Prothesenzähne mit einem CAM-Verfahren oder einem Rapid-Prototyping-Verfahren hergestellt und/oder bearbeitet wird oder werden.

Die Prothesenbasis wird in einem bekannten Fertigungsprozess hergestellt. Beispielsweise könnte ein additives Verfahren (wie beispielsweise Stereolithographie) oder ein subtraktives Verfahren (Fräsen) angewendet werden. Aber auch andere bekannte Verfahren, die auf der Verwendung von Pulvern und Flüssigkeiten basieren, sind einsetzbar.

Hierdurch können die mit modernen computerbasierten Herstellungsverfahren erzeugten Dentalprothesenteile mit möglichst geringem Aufwand mit einem Verfahren nachbearbeitet werden, dass die erfindungsgemäßen Vorteile aufweist.

Des Weiteren kann vorgesehen sein, dass in Schritt D) die Veränderung der Position und/oder der Ausrichtung des wenigstens einen Prothesenzahns relativ zu der Prothesenbasis direkt durch Anpassung am Patienten erfolgt.

Hierdurch kann erreicht werden, dass die hergestellte Dentalprothese dem Patienten besonders gut passt. Beispielsweise kann eine Okklusionsprüfung am Patienten erfolgen und dabei die Position und/oder die Ausrichtung der Prothesenzähne zur Prothesenbasis an die Okklusionsbedingungen und die Mundraumsituation des Patienten angepasst werden, bevor das Verbindungsmittel ausgehärtet wird.

Gemäß einer Weiterbildung des erfindungsgemäßen Verfahrens kann auch vorgesehen sein, dass nach Schritt A) und vor Schritt B) die basalen Oberflächen der Prothesenzähne zumindest bereichsweise mit einem Lösungsmittel angequollen werden und/oder die Zahnfächern der Prothesenbasis zumindest bereichsweise mit einem Lösungsmittel angequollen werden.

Hierdurch wird eine besonders stabile Verbindung der Prothesenzähne mit der Prothesenbasis erreicht. Durch das Anquellen werden die Oberflächen flüssig beziehungsweise fluid, so dass diese Oberflächen neu ausgehärtet werden müssen und sich zuvor mit dem Verbindungsmittel verbinden und so eine stabilere Verbindung über eine größere Dicke des Prothesenmaterials erzeugt wird.

Bevorzugt kann auch vorgesehen sein, dass zwischen den Schritten A) und B) die freiliegenden Oberflächen der Prothesenzähne zumindest bereichsweise aufgeraut und mit einem Lösungsmittel angequollen werden und/oder die Zahnfächern der Prothesenbasis zumindest bereichsweise aufgeraut und mit einem Lösungsmittel angequollen werden.

Durch die zusätzliche Aufrauhung oder Anrauhung der Oberflächen kann das Lösungsmittel die Oberflächen schneller anlösen. Das Aufrauen oder Anrauhen der Oberfläche kann durch das Lösungsmittel geschehen. Zudem wird die effektive Oberfläche zum Verbinden mit dem Verbindungsmittel vergrößert und damit der Halt der Prothesenzähne in der Prothesenbasis verbessert und dadurch die Haltbarkeit der Dentalprothese verbessert. Ferner können erfindungsgemäß die Prothesenzähne und die Prothesenbasis mit heißem Wasser oder Wasserdampf gereinigt werden, bevor ein Anquellen oder Anrauhen der Oberflächen erfolgt oder bevor diese mit dem Verbindungsmittel kontaktiert werden.

Ferner kann vorgesehen sein, dass als Lösungsmittel eine Methylmethacrylat-haltige Flüssigkeit verwendet wird.

Es wird auch vorgeschlagen, dass die Zahnfächer der Prothesenbasis größer sind als die korrespondierenden basalen Oberflächen der Prothesenzähne (beziehungsweise als die korrespondierenden basalen Oberflächen der Prothesenzähne, die zur Auflage an oder in den Zahnfächern der Prothesenbasis vorgesehen sind), so dass die Prothesenzähne in den Zahnfächern der Prothesenbasis beweglich sind, bevorzugt die Prothesenzähne in den Zahnfächern der Prothesenbasis um bis zu 10° gekippt, gedreht und/oder um bis zu 1 mm in der Position verschoben werden können.

Hierdurch werden die notwendigen Zwischenräume zur Beweglichkeit der Prothesenzähne relativ zu der Prothesenbasis geschaffen, die erfindungsgemäß mit dem plastisch verformbaren Verbindungsmittel zur variablen Stabilisierung der Position und der Ausrichtung der Prothesenzähne zumindest bereichsweise gefüllt werden.

Dabei kann bevorzugt vorgesehen sein, dass überschüssige Mengen Verbindungsmittel vor oder nach dem Aushärten entfernt werden.

Mit einer Weiterbildung des erfindungsgemäßen Verfahrens kann auch vorgesehen sein, dass als Verbindungsmittel ein aushärtbarer Kunststoff verwendet wird, bevorzugt ein Zementteig aus einem Pulver und einer Flüssigkeit verwendet wird, besonders bevorzugt ein Polymethylmethacrylat-Zementteig verwendet wird.

Hierdurch lässt sich eine besonders stabile und einfach herzustellende Verbindung zwischen den Prothesenzähnen und der Prothesenbasis herstellen. Besonders bevorzugt werden dabei Zemente, die eine kurze Anquellzeit und eine blasenfreie Aushärtung des Zements aufweisen.

Das Verbindungsmittel zur endgültigen Fixierung der Prothesenzähne in der Prothesenbasis sollte nicht toxisch, Volumenfüllend, Farbstabil, Dauerhaft im Verbund, Hydrolyse-Beständig und Volumenstabil beim Aushärten sein, sowie eine passende Farbe haben, die über lange Zeit stabil ist. Hierfür kommen PMMA-basierte Zemente in Frage. Grundsätzlich könnte zur Umsetzung eines erfindungsgemäßen Verfahrens dauerhaft aushärtende Modelliermassen ähnlich der Modelliermasse FIMO^{®} als Verbindungsmittel verwendet werden. Viele dieser Modelliermassen sind aber aufgrund der schlechten Verbindung mit dem Kunststoff der Prothesenbasis und den Prothesenzähnen ungeeignet. Solche Modelliermassen haben aber eine geeignete Konsistenz und/oder Fließgrenze und können durch eine Temperaturbehandlung relativ einfach ausgehärtet werden. Bevorzugt werden wegen der besseren Stabilität der Verbindung zu der Prothesenbasis und zu den Prothesenzähnen aushärtbare Kunststoffe mit einer ähnlichen Konsistenz, das heißt einer knetartigen oder wachsartigen Konsistenz. Weitere Materialien, die grundsätzlich als Verbindungsmittel für erfindungsgemäße Verfahren einsetzbar sind, sind die im Dentalbereich verwendeten Kunststoffe Versyo^{®} der Firma Heraeus Kulzer GmbH & Co. KG sowie Eclipse^{®} der Firma DeguDent GmbH.

Ferner kann vorgesehen sein, dass nach Schritt D), und bevorzugt vor Schritt E), die Bereiche um die Prothesenzähne in der Verbindung zur Prothesenbasis ausmodelliert werden, ohne dabei die Position und Ausrichtung der Prothesenzähne zur Prothesenbasis zu verändern.

Hierdurch wird erreicht, dass die erzeugte Dentalprothese optisch einwandfrei ist und keine ästhetisch oder aus hygienegründen störenden Vorsprünge oder Kavitäten aufweist.

Es kann auch vorgesehen sein, dass die Aushärtung des plastisch verformbaren Verbindungsmittels in Schritt E) durch Besprühen mit einem Aktivator, durch Einlegen in ein Bad mit einem Aktivator, mittels Bestrahlung mit UV-Licht oder mit Mikrowellen, durch eine Temperaturbehandlung in einem Ofen oder einem Wasserbad, durch Druck und/oder mit Ultraschall induziert wird oder erfolgt.

Diese Maßnahmen sind zur Aushärtung des Verbindungsmittels besonders geeignet. Eine derartige induzierte Aushärtung durch Besprühen mit einem Aktivator, durch Einlegen in ein Bad mit einem Aktivator, mittels Bestrahlung mit UV-Licht oder mit Mikrowellen, durch eine Temperaturbehandlung in einem Ofen oder einem Wasserbad und/oder mit Ultraschall gibt dem Anwender genug Zeit, um die Position und/oder die Ausrichtung der Prothesenzähne relativ zur Prothesenbasis einzustellen und ermöglicht anschließend eine schnelle Weiterbearbeitung und Fertigstellung der Dentalprothese. Theoretisch kann alternativ auch einfach eine ausreichend lange Zeitspanne abgewartet werden, in der das Verbindungsmittel von selbst aushärtet. Es ist jedoch vorteilhaft, wenn durch eigene Maßnahmen Einfluss auf die Aushärtung genommen werden kann, beziehungsweise diese induziert werden kann.

Des Weiteren kann vorgesehen sein, dass die Konsistenz des Verbindungsmittels, insbesondere die Fließgrenze und/oder die Zähigkeit des Verbindungsmittels, innerhalb von zumindest 1 Stunde sich um maximal 50% ändert, bevorzugt innerhalb von zumindest 3 Stunden sich um maximal 50% ändert, besonders bevorzugt innerhalb von zumindest 50 Stunden sich um maximal 50% ändert.

Hierdurch kann sichergestellt werden, dass dem Anwender genug Zeit bleibt, um die Position und/oder die Ausrichtung der Prothesenzähne in oder an den Zahnfächern einzustellen und anschließend eine Fixierung durch das Aushärten gegebenenfalls in einem externen Labor zu erreichen.

Die der vorliegenden Erfindung zugrundeliegenden Aufgaben werden auch gelöst durch eine Dentalprothese hergestellt mit einem solchen erfindungsgemäßen Verfahren.

Die Aufgaben werden auch gelöst durch ein Set zum Durchführen eines solchen Verfahrens, aufweisend ein plastisch verformbares Verbindungsmittel, mehrere Prothesenzähne und wenigstens eine Prothesenbasis.

Dabei ist vorgesehen, dass das Set ein Mittel zur Aushärtung des Verbindungsmittels aufweist, bevorzugt einen fluiden Aktivator, eine UV-Lichtquelle, eine Mikrowellenquelle, einen Ofen, ein zu temperierendes Flüssigkeitsbad, einen Autoklaven und/oder eine Ultraschallquelle als Mittel zur Aushärtung des Verbindungsmittels aufweist.

Die Prothesenzähne und/oder die Prothesenbasis bestehen bevorzugt aus einem Kunststoff, besonders bevorzugt aus Polymethylmethacrylat (PMMA).

Die Prothesenzähne können einzeln und/oder in mehreren Gruppen zusammenhängend oder als komplette Zahnreihen zusammenhängend vorliegen. Zusammenhängende Prothesenzähne sind fest miteinander verbunden.

Die Prothesenbasis und das Verbindungsmittel werden bevorzugt aus einem rosafarbenen oder pinken Kunststoff gefertigt und die Prothesenzähne aus einem zahnfarbenen Kunststoff.

Der Erfindung liegt die überraschende Erkenntnis zugrunde, dass es durch das Verfahren gelingt, die Position und die Ausrichtung der Prothesenzähne zumindest geringfügig veränderbar zu machen und anschließend die Dentalprothese auf einfache Weise durch Anpassen der Position und/oder der Ausrichtung der Prothesenzähne gegen die Prothesenbasis und anschließendes Aushärten des Verbindungsmittels endfertigen zu können. Hierzu wird im Rahmen der vorliegenden Erfindung das Verbindungsmittel eingesetzt, dessen Konsistenz so gewählt ist, dass die Position und Ausrichtung der Prothesenzähne in den Zahnfächern der Prothesenbasis veränderbar aber ohne Krafteinwirkung stabil ist, und das zu einer festen und harten Masse zur endgültigen Verbindung der Prothesenzähne mit der Prothesenbasis ausgehärtet werden kann.

Der Erfindung basiert somit darauf, ein flexibles wachsähnliches Material als Verbindungsmittel im Überschuss zwischen den Prothesenzähnen und der Prothesenbasis zu verwenden, mit der Möglichkeit zur Anprobe und Umstellung von künstlichen Prothesenzähnen aus Kunststoff oder Keramik auf einer festen Prothesenbasis, sowie der anschließender Aushärtung mit irreversibler Fixierung der künstlichen Prothesenzähne in der Prothesenbasis im selben Material.

Die einzelnen Zahnfächer oder die gesamte Zahnbasis auf der starren Prothesenbasis sind dabei so ausgelegt, dass sie mit dem flexiblen rosafarbenen Kunststoff als Verbindungsmittel versehen werden können. Die künstlichen Prothesenzähne werden in diesem flexiblen Kunststoff befestigt, ausgerichtet und ausmodelliert. Der flexible Kunststoff kann zur endgültigen Fertigstellung mit einem Aktivator oder UV-Licht oder Mikrowellen ausgehärtet werden.

Der Vorteil besteht darin, dass das Verbindungsmittel als flexibles und finales Material identisch mit dem endgültigen Fixierungsmittel zur Befestigung der Prothesenzähne in der Prothesenbasis ist. Dadurch sind weniger Arbeitsschritte erforderlich, da ein Austreiben von Wachs oder Einbetten in Gips, wie es bei herkömmlichen Verfahren notwendig ist, entfällt. Probleme, die bei häufigen Umstellungen und Korrekturen der Prothesenzähne auftreten können, werden stark reduziert und das gesamte Verfahren wird vereinfacht. Ein Materialwechsel zwischen Wachs und Kunststoff entfällt und die Arbeitsabläufe werden vereinfacht.

Im Folgenden werden Ausführungsbeispiele der Erfindung anhand von drei schematisch dargestellten Figuren erläutert, ohne jedoch dabei die Erfindung zu beschränken. Dabei zeigt:
Figur 1: eine perspektivische Ansicht einer Prothesenbasis für einen Unterkiefer zum Durchführen eines erfindungsgemäßen Verfahrens;
Figur 2: einen Querschnitt durch eine Dentalprothese, bei der die Prothesenzähne mit einem Verbindungsmittel in Zahnfächern einer Prothesenbasis gehalten werden auf einem Modell des Mundraums eines Patienten; und
Figur 3: einen weiteren Querschnitt durch eine Dentalprothese, bei der die Prothesenzähne mit einem Verbindungsmittel in Zahnfächern einer Prothesenbasis gehalten werden auf einem Modell des Mundraums eines Patienten.

Mit den Figuren werden für gleichartige aber nicht notwendig gleiche Teile und Merkmale die gleichen Bezugszeichen auch bei unterschiedlichen Ausführungsbeispielen verwendet.

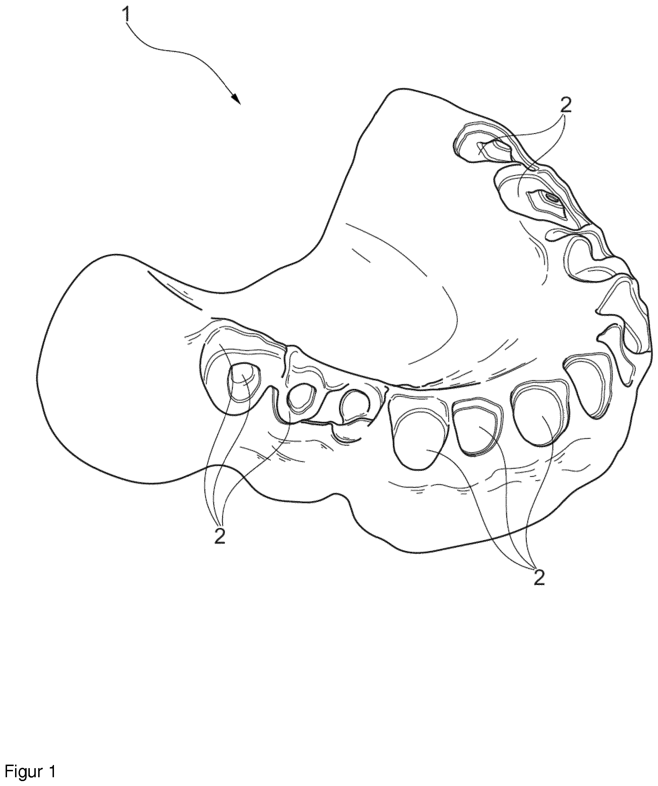

Figur 1 zeigt eine perspektivische Ansicht einer Prothesenbasis 1 für einen Unterkiefer zum Durchführen eines erfindungsgemäßen Verfahrens. Die Prothesenbasis besteht aus einem rosafarben eingefärbten Kunststoff. Die Färbung und Transparenz wird passend zu einer Zahnfleischoptik gewählt. In der Oberseite der Prothesenbasis 1 sind eine Vielzahl von Zahnfächern 2 zur Fixierung von Prothesenzähnen (in Figur 1 nicht gezeigt) vorgesehen. Die Zahnfächer 2 sind dabei als Vertiefungen in dem Kiefersattel der Prothesenbasis 1 ausgeformt. In diese Zahnfächer 2 kann das Verbindungsmittel (in Figur 1 nicht gezeigt) zur Verbindung der Prothesenzähne mit der Prothesenbasis 1 eingebracht beziehungsweise aufgetragen werden. Die Zahnfächer 2 können eine Indexierung aufweisen, so dass die Prothesenzähne nur in einem bestimmten Orientierungsbereich in der Prothesenbasis 1 einzusetzen sind und jeder Prothesenzahn möglichst nur zu einem bestimmten Zahnfach 2 passt.

Die Zahnfächer 2 weisen in den Vertiefungen zentral angeordnete Erhebungen auf, die zu entsprechenden Vertiefungen in den basalen Enden der Prothesenzähne (in Figur 1 nicht gezeigt) passen. Dadurch kann noch eindeutiger und erkennbarer vorgegeben werden, welche Prothesenzähne in welche Zahnfächer 2 gesetzt werden sollen und in welcher Orientierung die Prothesenzähne in die Zahnfächer 2 gesteckt werden sollen. Die Erhebungen können nämlich bei geeigneter Symmetriebrechung als Indexierungen dienen. Zudem kann so eine stabilere Verbindung der Prothesenbasis 1 zu den Prothesenzähnen erzeugt werden. Die Vertiefungen in den basalen Enden der Prothesenzähne sind größer als die Erhebungen in den Zahnfächern 2, um eine Korrektur der Position und der Ausrichtung der Prothesenzähne innerhalb der Zahnfächer 2 zu ermöglichen. Dies schränkt zwar die Eindeutigkeit der Positionierung ein, ist aber für die erfindungsgemäß beabsichtigte Variabilität notwendig.

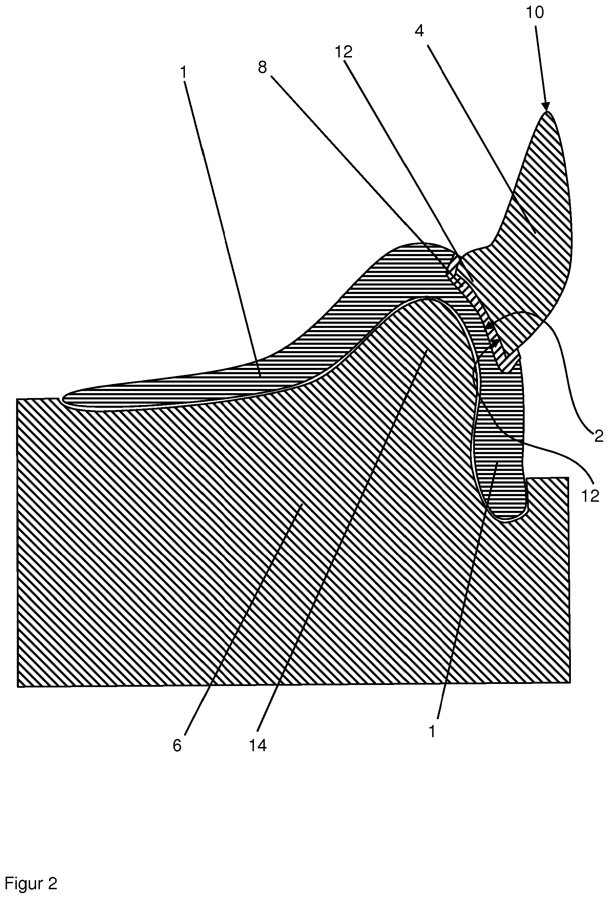

Figur 2 zeigt eine Querschnittansicht durch eine erfindungsgemäße beziehungsweise erfindungsgemäß hergestellte Dentalprothese, bei der Prothesenzähne 4 mit einem Verbindungsmittel 8 in Zahnfächern 2 einer Prothesenbasis 1 gehalten werden, wobei das Dentalprothesenmodell auf einem Modell 6 des Mundraums eines Patienten aufliegt. Die Querschnittebene liegt in der Transversalebene des Patienten oder ist parallel zur Transversalebene des Patienten. Die Prothesenzähne 4 sind hier Schneidezahnprothesen beziehungsweise als Incisiven ausgebildet.

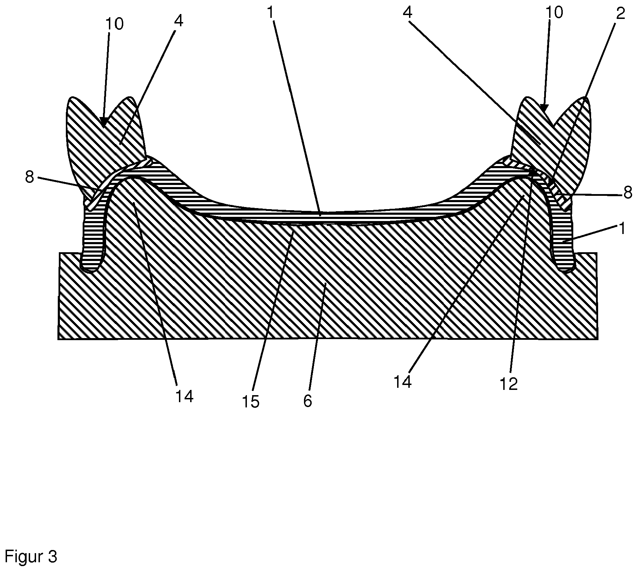

Figur 3 zeigt einen Querschnitt einer Dentalprothese analog zu Figur 2, wobei der Schnitt parallel zu einer Frontalebene dargestellt ist. Die geschnittenen Prothesenzähne 4 sind hier als Molaren ausgebildet beziehungsweise als Backenzahnprothesen ausgebildet.

Die Prothesenzähne 4 bestehen aus einem harten weißen Kunststoff mit einer für Zähne oder zu den Zähnen des Patienten passenden Färbung und Transparenz. Jeder Prothesenzahn 4 weist eine koronale beziehungsweise okklusale Oberfläche 10 (Kaufläche) und eine basale Oberfläche 12 auf. Die basale Oberfläche 12 wird in den Zahnfächern 2 fixiert. Das Verbindungsmittel 8 besteht aus einem rosa-eingefärbten aushärtbaren Kunststoff mit Zahnfleischoptik. Das Verbindungsmittel 8 hat eine wachsartige Beschaffenheit, wie beispielsweise Knete, so dass es zwar unter Krafteinwirkung plastisch verformbar ist, aber die eingesetzten Prothesenzähne nicht durch ihr Eigengewicht das Verbindungsmittel 8 nicht plastisch verformt wird. Diese Konsistenz sollte das Verbindungsmittel 8 für wenigstens eine Stunde halten, um eine Bearbeitung der Position und/oder der Ausrichtung der Prothesenzähne 4 relativ zu der Prothesenbasis 1 ohne großen Zeitdruck zu ermöglichen.

Die Zahnfächer 2 sind etwas größer als die basalen Gegenstücke auf der basalen Seite 12 der Prothesenzähne 4. Vor dem ersten Einsetzen der Prothesenzähne 4 in die Zahnfächer 2 in die Prothesenbasis 1, werden die Zahnfächer 2 und die Prothesenzähne 4 (zumindest die basalen Seiten 12 der Prothesenzähne 4) gereinigt und zur Verbesserung der Verbindung mit dem Verbindungsmittel 8 mit einem Lösungsmittel angerauht und angequollen. Anschließend wird das Verbindungsmittel 8 auf die basalen Seiten 12 der Prothesenzähne 4 und/oder die Zahnfächer 2 aufgetragen. Das Verbindungsmittel 8 ist dann nach dem Einsetzen der Prothesenzähne 4 zwischen der Prothesenbasis 1 und den Prothesenzähnen 4 angeordnet. Dadurch sind die eingesetzten Prothesenzähne 4 in der Prothesenbasis 1 leicht beweglich und ermöglichen so dem Zahnarzt oder dem Anwender geringfügige Korrekturen der Position und Ausrichtung der Prothesenzähne 4 in der Prothesenbasis 1. Dadurch können die Position und die Ausrichtung der Prothesenzähne 4 in der Prothesenbasis 1 an die Bedürfnisse eines Patienten angepasst werden, für den die zu erzeugende Dentalprothese bestimmt ist. Die zur Ausrichtung und Positionierung der Prothesenzähne 4 notwendigen Daten werden am Patienten direkt oder mit Hilfe von CAD-Verfahren und/oder Aufnahmen (3D-Scans) oder mit Hilfe von Artikulatoren und Abdrücken gewonnen. Am einfachsten kann die Prothesenbasis 1 mit den eingesetzten Prothesenzähnen 4 beim Patienten eingesetzt werden und die Position und Ausrichtung an die Mundraumsituation des Patienten angepasst werden.

Zur Befestigung wird das Verbindungsmittel 8 im Überschuss verwendet, so dass die Zwischenräume zwischen den Zahnfächern 2 und den Prothesenzähnen 4 mit dem Verbindungsmittel 8 gefüllt werden, ohne dass basale Hohlräume in den Zwischenräumen verbleiben und ohne dass im Gingvia-Zahnhalsbereich der erzeugten Dentalprothese Randspalte verbleiben. Zudem werden durch den Überschuss die Kontaktflächen optimal benetzt. Hervorquellende überschüssige Reste des Verbindungsmittels 8 können vor dem Aushärten und/oder nach dem Aushärten entfernt werden.

In den in den Figuren 2 und 3 gezeigten Ausführungen ist das Verbindungsmittel 8 vollständig zwischen den Prothesenzähnen 4 und der Oberfläche der Zahnfächer angeordnet, ohne dass es ein Kontakt zwischen den Prothesenzähnen 4 und den Zahnfächern 2 zu erkennen wäre. Die Prothesenzähne 4 können auch derart in die Zahnfächer 2 eingeschoben werden, dass die basalen Seiten 12 der Prothesenzähne 4 punktuell und/oder bereichsweise flächenbündig an den Zahnfächern 2 anliegen.

Nach erfolgter Anpassung der Lage und Orientierung der Prothesenzähne 4 in der Prothesenbasis 1 werden die Prothesenzähne 4 in der Prothesenbasis 1 endgültig fixiert, indem das Verbindungsmittel 8 ausgehärtet wird. Dabei dürfen die Prothesenzähne 4 nicht derart mechanisch belastet werden, dass deren Ausrichtung oder Position verändert wird. Dies kann beispielsweise temperaturinduziert in einem temperierten Wasserbad oder in einem Ofen erfolgen.

Alternativ kann als Verbindungsmittel 8 ein selbsthärtender Zement auf Pulver-Flüssigkeitsbasis verwendet werden, der in einer derartigen Mischung angerührt wird, dass er eine wachsähnliche Konsistenz aufweist, die zur Veränderung der Position und der Ausrichtung der Prothesenzähne 4 in der Prothesenbasis 1 geeignet ist. Ebenso kann ein Anhärten des Zements abgewartet oder aktiv induziert beziehungsweise durchgeführt werden, so dass das Verbindungsmittel 8 die gewünschte Konsistenz beziehungsweise die gewünschte Fließgrenze aufweist. Lichthärtende Zemente oder Klebstoffe sind insbesondere dann geeignet, wenn die verwendeten Kunststoffe lichtleitende Eigenschaften haben und dadurch das Licht nicht nur in die Randbereiche der Zwischenräume zwischen den Prothesenzähnen 4 und der Prothesenbasis 1 eindringen kann. Mikrowellenhärtende Verbindungsmittel 8 können bei der Verwendung nicht lichtleitender Kunststoffe geeignet sein, da die Mikrowellen dann eine bessere Eindringtiefe erzielen als Licht.

Ebenfalls gut geeignet sind, aufgrund der schnellen Anquellzeit und der blasenfreien Aushärtung bei Raumtemperatur auch ohne Drucktopf (das heißt ohne Überdruck), bei Raumtemperatur aushärtende Prothesenwerkstoffe auf Pulver-Flüssigkeitsbasis.

Die Prothesenbasis 1 liegt im Oberkiefer auf einem Kieferbogen 14 oder Kieferkamm 14 und einem Gaumen 15 des Modells 6 des Mundraums auf, um dem Anwender die relevanten anatomischen Strukturen des Mundraums des Patienten vorzugeben und um die Prothesenbasis 1 stabil zu halten. Zur Herstellung einer Prothesenbasis für den Unterkiefer wird ein entsprechendes Modell (nicht gezeigt) des Unterkiefers verwendet.

Das erfindungsgemäße Verfahren kann mit manuell oder mittels eines mit Rapid-Prototyping-Verfahren hergestellten Prothesenbasen 1 durchgeführt werden. Ebenso kann das Verfahren auch auf gedruckte Prothesenzähne oder Prothesenzahnreihen angewandt werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Prothesenbasis
- 2: Zahnfach zur Fixierung von Prothesenzähnen
- 4: Prothesenzahn
- 6: Modell des Mundraums
- 8: Verbindungsmittel
- 10: Koronale Fläche des Prothesenzahns
- 12: Basale Fläche / Seite des Prothesenzahns
- 14: Kieferbogen /Kieferkamm des Modells des Mundraums
- 15: Gaumen des Modells des Mundraums

## Patentansprüche

1. Verfahren zur Herstellung einer Dentalprothese aus einer Prothesenbasis (1) und mehreren Prothesenzähnen (4) **gekennzeichnet durch** die folgenden chronologischen Schritte:
A) Bereitstellen der Prothesenzähne (4) und der Prothesenbasis (1), wobei die Prothesenbasis (1) mit einem CAM-Verfahren oder einem Rapid-Prototyping-Verfahren hergestellt und/oder bearbeitet wird, so dass die Prothesenbasis (1) mehrere Zahnfächer (2) zum Anlegen von basalen Flächen der Prothesenzähne (4) aufweist, wobei die Zahnfächer (2) der Prothesenbasis (1) größer sind als die korrespondierenden basalen Oberflächen der Prothesenzähne (4), so dass die Prothesenzähne (4) in den Zahnfächern (2) der Prothesenbasis (1) beweglich sind;
B) ein plastisch verformbares Verbindungsmittel (8) wird auf die Zahnfächer (2) aufgebracht und/oder basal auf die Prothesenzähne (4) aufgebracht;
C) die Prothesenzähne (4) werden an die Zahnfächer (2) der Prothesenbasis (1) angelegt und dabei mit Hilfe des Verbindungsmittels (8) mit der Prothesenbasis (1) derart verbunden, dass die Prothesenzähne (4) nach dem Anlegen an die Zahnfächer (2) beweglich gegenüber der Prothesenbasis (1) sind, wobei die Position und die Ausrichtung der Prothesenzähne (4) zur Prothesenbasis (1) erhalten bleibt, wenn keine externe Krafteinwirkung auf die Prothesenzähne (4) ausgeübt wird;
D) die Position und/oder die Ausrichtung wenigstens eines Prothesenzahns (4) in der Prothesenbasis (1) wird verändert; und
E) das plastisch verformbare Verbindungsmittel (8) wird ausgehärtet und die Prothesenzähne (4) werden dabei fest mit der Prothesenbasis (1) verbunden, wobei die Position und die Ausrichtung der Prothesenzähne (4) zur Prothesenbasis (1) erhalten bleiben.

2. Verfahren nach Anspruch 1, **dadurch gekennzeichnet, dass**
bei einer Bewegung der Prothesenzähne (4) relativ zu der Prothesenbasis (1) oder bei einer Veränderung der Position und/oder der Ausrichtung des wenigstens einen Prothesenzahns (4) relativ zu der Prothesenbasis (1) sich das Verbindungsmittel (8) plastisch verformt.

3. Verfahren nach Anspruch 1 oder 2, **dadurch gekennzeichnet, dass**
zur Veränderung der Position und/oder der Ausrichtung des wenigstens einen Prothesenzahns (4) relativ zu der Prothesenbasis (1) eine Kraft auf den wenigstens einen Prothesenzahn (4) ausgeübt wird.

4. Verfahren nach Anspruch 3, **dadurch gekennzeichnet, dass**
die Prothesenbasis (1) zuvor fixiert wird und zumindest während der Einwirkung der Kraft auf den wenigstens einen Prothesenzahn (4) fixiert bleibt.

5. Verfahren nach einem der vorangehenden Ansprüche, **dadurch**
**gekennzeichnet, dass**
das Verbindungsmittel (8) eine Fließgrenze aufweist, unterhalb derer das Verbindungsmittel (8) elastisch ist und oberhalb derer das Verbindungsmittel (8) plastisch verformbar ist.

6. Verfahren nach Anspruch 5, **dadurch gekennzeichnet, dass**
das Verbindungsmittel (8) eine Fließgrenze zwischen 10⁴ N/m² und 10⁷ N/m² aufweist, bevorzugt eine Fließgrenze zwischen 10⁴ N/m² und 10⁶ N/m² aufweist, besonders bevorzugt eine Fließgrenze zwischen 10⁴ N/m² und 10⁵ N/m² aufweist.

7. Verfahren nach einem der vorangehenden Ansprüche, **dadurch**
**gekennzeichnet, dass**
die an die Zahnfächer (2) der Prothesenbasis (1) angelegten Prothesenzähne (4) auf der koronalen Seite in einem Schlüssel fixiert werden, wobei dadurch die Lage und die Position der Prothesenzähne (4) zueinander in der veränderten Position und/oder Ausrichtung gesichert wird.

8. Verfahren nach einem der vorangehenden Ansprüche, **dadurch**
**gekennzeichnet, dass**
in Schritt D) die Veränderung der Position und/oder der Ausrichtung des wenigstens einen Prothesenzahns (4) relativ zu der Prothesenbasis (1) direkt durch Anpassung am Patienten erfolgt.

9. Verfahren nach einem der vorangehenden Ansprüche, **dadurch**
**gekennzeichnet, dass**
nach Schritt A) und vor Schritt B) die basalen Oberflächen der Prothesenzähne (4) zumindest bereichsweise mit einem Lösungsmittel angequollen werden und/oder die Zahnfächer (2) der Prothesenbasis (1) zumindest bereichsweise mit einem Lösungsmittel angequollen werden.

10. Verfahren nach einem der vorangehenden Ansprüche, **dadurch**
**gekennzeichnet, dass**
die Zahnfächer (2) der Prothesenbasis (1) größer sind als die korrespondierenden basalen Oberflächen der Prothesenzähne (4), so dass die Prothesenzähne (4) in den Zahnfächern (2) der Prothesenbasis (1) um bis zu 10° gekippt, gedreht und/oder um bis zu 1 mm in der Position verschoben werden können.

11. Verfahren nach einem der vorangehenden Ansprüche, **dadurch**
**gekennzeichnet, dass**
als Verbindungsmittel (8) ein aushärtbarer Kunststoff verwendet wird, bevorzugt ein Zementteig aus einem Pulver und einer Flüssigkeit verwendet wird, besonders bevorzugt ein Polymethylmethacrylat-Zementteig verwendet wird.

12. Verfahren nach einem der vorangehenden Ansprüche, **dadurch**
**gekennzeichnet, dass**
nach Schritt D), und bevorzugt vor Schritt E), die Bereiche um die Prothesenzähne (4) in der Verbindung zur Prothesenbasis (1) ausmodelliert werden, ohne dabei die Position und Ausrichtung der Prothesenzähne (4) zur Prothesenbasis (1) zu verändern.

13. Verfahren nach einem der vorangehenden Ansprüche, **dadurch**
**gekennzeichnet, dass**
die Aushärtung des plastisch verformbaren Verbindungsmittels (8) in Schritt E) durch Besprühen mit einem Aktivator, durch Einlegen in ein Bad mit einem Aktivator, mittels Bestrahlung mit UV-Licht oder mit Mikrowellen, durch eine Temperaturbehandlung in einem Ofen oder einem Wasserbad und/oder mit Ultraschall induziert wird oder erfolgt.

14. Verfahren nach einem der vorangehenden Ansprüche, **dadurch**
**gekennzeichnet, dass**
die Konsistenz des Verbindungsmittels (8), insbesondere die Fließgrenze und/oder die Zähigkeit des Verbindungsmittels (8), innerhalb von zumindest 1 Stunde sich um maximal 50% ändert, bevorzugt innerhalb von zumindest 3 Stunden sich um maximal 50% ändert, besonders bevorzugt innerhalb von zumindest 50 Stunden sich um maximal 50% ändert.

15. Dentalprothese hergestellt mit einem Verfahren nach einem der Ansprüche 1 bis 14.

16. Set zum Durchführen eines Verfahrens nach einem der Ansprüche 1 bis 14, aufweisend ein plastisch verformbares Verbindungsmittel (8), mehrere Prothesenzähne (4) und wenigstens eine Prothesenbasis (1), **dadurch gekennzeichnet, dass** das Set ein Mittel zur Aushärtung des Verbindungsmittels (8) aufweist, bevorzugt einen fluiden Aktivator, eine UV-Lichtquelle, eine Mikrowellenquelle, einen Ofen, ein zu temperierendes Flüssigkeitsbad und/oder eine Ultraschallquelle als Mittel zur Aushärtung des Verbindungsmittels (8) aufweist.

## Claims

1. Method for producing a dental prosthesis from a prosthesis base (1) and a plurality of prosthesis teeth (4), **characterized by** the following chronological steps:
A) Provision of the prosthesis teeth (4) and of the prosthesis base (1), wherein the prosthesis base (1) is produced and/or processed with a CAM process or a rapid-prototyping process, such that the prosthesis base (1) comprises tooth sockets (2) for locating the basal surfaces of the prosthesis teeth (4), wherein the tooth sockets (2) of the prosthesis base (1) are larger than the corresponding basal surfaces of the prosthesis teeth (4), such that the prosthesis teeth (4) are movable in the tooth sockets (2) of the prosthesis base (1);
B) a plastically deformable connecting means (8) is applied onto the tooth sockets (2) and/or basally onto the prosthesis teeth (4);
C) the prosthesis teeth (4) are located into the tooth sockets (2) of the prosthesis base (1), and in this situation are connected with the aid of the connecting means (8) to the prosthesis base (1) in such a way that the prosthesis teeth (4), after locating in the tooth sockets (2), are movable in relation to the prosthesis base (1), wherein the position and the alignment of the prosthesis teeth (4) to the prosthesis base (1) remain retained if no external force effect is exerted onto the prosthesis teeth (4);
D) the position and/or the alignment of at least one prosthesis tooth (4) in the prosthesis base (1) is changed; and
E) the plastically deformable connecting means (8) is hardened, and the prosthesis teeth (4) in this situation are securely connected to the prosthesis base (1), wherein the position and the alignment of the prosthesis teeth (4) in relation to the prosthesis base (1) remain retained.

2. Method according to claim 1, **characterized in that**
during a movement of the prosthesis teeth (4) relative to the prosthesis base (1), or a change of the position and/or the alignment of the at least one prosthesis tooth (4) relative to the prosthesis base (1), the connecting means (8) plastically deforms.

3. Method according to claim 1 or 2, **characterized in that**
in order to change the position and/or the alignment of the at least one prosthesis tooth (4) relative to the prosthesis base (1), a force is exerted on the at least one prosthesis tooth (4).

4. Method according to claim 3, **characterized in that**
the prosthesis base (1) is fixed beforehand, and, at least during the exertion of the force on the at least one prosthesis tooth (4), it remains fixed.

5. Method according to any of the preceding claims, **characterized in that**
the connecting means (8) exhibits a yield point, below which the connecting means (8) is elastic, and above which the connecting means (8) is plastically deformable.

6. Method according to claim 5, **characterized in that**
the connecting means (8) exhibits a yield point of between 10⁴ N/m² and 10⁷ N/m², preferably a yield point of between 10⁴ N/m² and 10⁶ N/m², and particularly preferred a yield point between 10⁴ N/m² and 10⁵ N/m²,.

7. Method according to any of the preceding claims, **characterized in that**
the prosthesis teeth (4) located in the tooth sockets (2) of the prosthesis base (1) are fixed on the coronal side in a key, wherein, as a result, the location and the position of the prosthesis teeth (4) in relation to one another are secured in the changed position and/or alignment.

8. Method according to any of the preceding claims, **characterized in that**
in step D) the change of the position and/or the alignment of the at least one prosthesis tooth (4) relative to the prosthesis base (1) takes place directly by adjustment to the patient.

9. Method according to any of the preceding claims, **characterized in that** after step A) and before step B), the basal surfaces of the prosthesis teeth (4) are swelled at least in some areas by means of a solvent, and/or the tooth sockets (2) of the prosthesis base (1) are swelled at least in some areas by means of a solvent.

10. Method according to any of the preceding claims, **characterized in that**
the tooth sockets (2) of the prosthesis base (1) are larger than the corresponding basal surfaces of the prosthesis teeth (4), such that the prosthesis teeth (4) in the tooth sockets (2) of the prosthesis base (1) can be tilted or rotated by up to 10°, and/or displaced by up to 1 mm in position.

11. Method according to any of the preceding claims, **characterized in that**
as connecting means (8), a curable or hardenable plastic is used, preferably a cement paste formed of a powder and a liquid, and particularly preferred a polymethyl methacrylate cement paste.

12. Method according to any of the preceding claims, **characterized in that** after step D), and preferably before step E), the areas around the prosthesis teeth (4) are modeled in the connection to the prosthesis base (1), without thereby changing the position and alignment of the prosthesis teeth (4) in relation to the prosthesis base (1).

13. Method according to any of the preceding claims, **characterized in that**
the hardening of the plastically deformable connecting means (8) in step E) is induced or carried out by spraying with an activator, by laying in a bath with an activator, by means of irradiation with UV light or with microwaves, by temperature treatment in a stove or water bath, and/or with ultrasonics.

14. Method according to any of the preceding claims, **characterized in that**
the consistency of the connecting means (8), in particular the yield point and/or the toughness of the connecting means (8), changes within at least one hour by a maximum of 50%, preferably within at least 3 hours by a maximum of 50%, and particularly preferred within at least 50 hours by a maximum of 50%.

15. Dental prosthesis produced by a method according to any one of claims 1 to 14.

16. Set for carrying out a method according to any one of claims 1 to 14, comprising a plastically deformable connecting means (8), a plurality of prosthesis teeth (4), and at least one prosthesis base (1), **characterized in that**
the set comprises a means for curing or hardening the connecting means (8), preferably a fluid activator, a UV light source, a microwave source, a stove, a temperature-controlled liquid bath, and/or an ultrasonic source, as means for curing or hardening the connecting means (8).

## Revendications

1. Procédé de fabrication d'une prothèse dentaire à partir d'une base de prothèse (1) et de plusieurs dents prothétiques (4), **caractérisé par** les étapes chronologiques suivantes :
A) mise au point des dents prothétiques (4) et de la base de prothèse (1), la base de prothèse (1) et/ou les dents prothétiques (4) étant fabriquées et/ou façonnées avec un procédé FAO ou un procédé de prototypage rapide, de sorte que la base de prothèse (1) présente plusieurs alvéoles dentaires (2) permettant la mise en place de surfaces basales des dents prothétiques (4), où les alvéoles dentaires (2) de la base de prothèse (1) sont plus grandes que les surfaces basales correspondantes des dents prothétiques (4), de sorte que les dents prothétiques (4) sont mobiles dans les alvéoles dentaires (2) de la base de prothèse (1) ;
B) un produit liant (8) déformable plastiquement est appliqué sur les alvéoles dentaires (2) et/ou est appliqué sur la base des dents prothétiques (4) ;
C) les dents prothétiques (4) sont mises en place sur les alvéoles dentaires (2) de la base de prothèse (1) et sont ainsi liées avec la base de prothèse (1) à l'aide du produit liant (8) de telle manière que les dents prothétiques (4) sont mobiles par rapport à la base de prothèse (4) après la mise en place sur les alvéoles dentaires (2), où la position et l'orientation des dents prothétiques (4) restent maintenues par rapport à la base de prothèse (1) lorsqu'aucune influence d'une force externe n'est exercée sur les dents prothétiques (4) ;
D) la position et/ou l'orientation d'au moins une dent prothétique (4) est modifiée dans la base de prothèse (1) ; et
E) le produit liant (8) déformable plastiquement est durci et les dents prothétiques (4) sont ainsi solidement reliées avec la base de prothèse (1), où la position et l'orientation des dents prothétiques (4) restent conservées par rapport à la base de prothèse (1).

2. Procédé selon la revendication 1, **caractérisé en ce que**,
lors du déplacement des dents prothétiques (4) par rapport à la base de prothèse (1) ou lors d'une modification de la position et/ou de l'orientation de l'au moins une dent prothétique (4) par rapport à la base de prothèse (1), le produit liant (8) se déforme plastiquement.

3. Procédé selon la revendication 1 ou la revendication 2, **caractérisé en ce que**,
pour la modification de la position et/ou de l'orientation de l'au moins une dent prothétique (4) par rapport à la base de prothèse (1), on exerce une force sur l'au moins une dent prothétique (4).

4. Procédé selon la revendication 3, **caractérisé en ce que**
la base de prothèse (1) est fixée préalablement et reste fixée au moins pendant l'exercice de la force sur l'au moins une dent prothétique (4).

5. Procédé selon l'une des revendications précédentes, **caractérisé en ce que**
le produit liant (8) présente un seuil d'écoulement en-dessous duquel le produit liant (8) est élastique et au-dessus duquel le produit liant (8) est déformable plastiquement.

6. Procédé selon la revendication 5, **caractérisé en ce que**
le produit liant (8) présente un seuil d'écoulement entre 10⁴ N/m² et 10⁷ N/m², présente de préférence présente un seuil d'écoulement entre 10⁴ N/m² et 10⁶ N/m², de manière particulièrement préférée, présente un seuil d'écoulement entre 10⁴ N/m² et 10⁵ N/m².

7. Procédé selon l'une des revendications précédentes, **caractérisé en ce que**
les dents prothétiques (4) placées sur les alvéoles dentaires (2) de la base de prothèse (1) sont fixées sur la face coronale avec un code, où ainsi l'emplacement et/ou la position des dents prothétiques (4) les unes par rapport aux autres est assurée dans la position et/ou l'orientation modifiées.

8. Procédé selon l'une des revendications précédentes, **caractérisé en ce que**
dans l'étape D), la modification de la position et/ou de l'orientation de l'au moins une dent prothétique (4) par rapport à la base de prothèse (1) a lieu directement par une adaptation sur le patient.

9. Procédé selon l'une des revendications précédentes, **caractérisé en ce que**,
après l'étape A), et avant l'étape B), les surfaces basales des dents prothétiques (4) sont gonflées au moins par endroits avec un solvant et/ou les alvéoles dentaires (2) de la base de prothèse (1) sont gonflées au moins par endroits avec un solvant.

10. Procédé selon l'une des revendications précédentes, **caractérisé en ce que**
les alvéoles dentaires (2) de la base de prothèse (1) sont plus grandes que les surfaces basales correspondantes des dents prothétiques (4) de sorte que les dents prothétiques (4) peuvent être basculées jusqu'à 10 °, tournées et/ou déplacées dans la position jusqu'à 1 mm.

11. Procédé selon l'une des revendications précédentes, **caractérisé en ce qu'**une matière plastique durcissable est employée en tant que produit liant (8), de préférence, on emploie une pâte de ciment à base d'une poudre et d'un liquide, de manière particulièrement préférée, on emploie une pâte de ciment de polyméthyl méthacrylate.

12. Procédé selon l'une des revendications précédentes, **caractérisé en ce qu'**après l'étape D), et de préférence avant l'étape E), les zones autour des dents prothétiques (4) sont modélisées dans la liaison par rapport à la base de prothèse (1), sans modifier par ce faire la position et l'orientation des dents prothétiques (4) par rapport à la base de prothèse (1).

13. Procédé selon l'une des revendications précédentes, **caractérisé en ce que** le durcissement du produit liant (8) déformable plastiquement dans l'étape E) est induit ou a lieu par une pulvérisation avec un activateur, par une implantation dans un bain avec un activateur, au moyen d'une irradiation avec une lumière UV ou avec des micro-ondes, par un traitement thermique dans un four ou dans un bain d'eau et/ou avec des ultrasons.

14. Procédé selon l'une des revendications précédentes, **caractérisé en ce que** la consistance du produit liant (8), notamment le seuil d'écoulement et/ou la résistance du produit liant (8) se modifie au maximum de 50 % en l'espace d'au moins 1 heure, de préférence, se modifie au maximum de 50 % en l'espace d'au moins 3 heures, de manière particulièrement préférée, se modifie se modifie au maximum de 50 % en l'espace d'au moins 50 heures.

15. Prothèse dentaire fabriquée avec un procédé selon l'une des revendications 1 à 14.

16. Ensemble permettant l'exécution d'un procédé selon l'une des revendications 1 à 14, présentant un produit liant (8) déformable plastiquement, plusieurs dents prothétiques (4) et au moins une base de prothèse (1), **caractérisé en ce que** l'ensemble présente un moyen pour le durcissement du produit liant (8), de préférence un activateur fluide, une source de lumière UV, une source de micro-ondes, un four, un bain de liquide thermostatique et/ou une source d'ultrasons en tant que moyen de durcissement du produit liant (8).
